# EUROPÄISCHE PATENTSCHRIFT

(11) **EP 3 915 773 B1**
(45) Veröffentlichungstag und Bekanntmachung des Hinweises auf die Patenterteilung: **28.08.2024**
(21) Anmeldenummer: 21174113.7
(22) Anmeldetag: 17.05.2021
(51) Int. Cl.: B32B 1/08, B32B 5/02, B32B 5/08, B32B 7/027, B32B 25/04, B32B 25/10, D02G 3/36, F16L 11/10

(54) **TEMPERATURBESTÄNDIGER SCHLAUCH**
TEMPERATURE-RESISTANT HOSE
TUYAU FLEXIBLE RÉSISTANT À LA TEMPÉRATURE

(30) Priorität: 28.05.2020 DE 102020206733
(43) Veröffentlichungstag der Anmeldung: 01.12.2021
(73) Patentinhaber: ContiTech Techno-Chemie GmbH, 61184 Karben (DE)
(72) Erfinder: BRÜHNE, Klaus, 30419 Hannover (DE); LAUN, Mario, 30419 Hannover (DE); TASSEKI, Metin, 30419 Hannover (DE); WITT, Erika, 30419 Hannover (DE); SCHMELTER, Klaus, 30419 Hannover (DE)
(74) Vertreter: Continental Corporation

(56) Entgegenhaltungen:
- KR-A- 20130 068 933
- KR-A- 20190 129 497
- US-A- 3 060 973
- US-A1- 2013 000 767

## Beschreibung

Die Erfindung betrifft einen Schlauch, der insbesondere bei HochtemperaturAnwendungen zum Einsatz kommt.

Umlageschläuche sind zum Beispiel aus WO2014/019796A2 bekannt. Es handelt sich um flexible Schläuche, die mit einer äußeren Lage aus Festigkeitsträgern, die auch als Umlage bzw. Umlageschicht bezeichnet wird, versehen sind. Innerhalb der umhüllenden äußeren Lage können derartige Schläuche mehrere Lagen oder Schichten aus unterschiedlichen, Elastomeren, thermoplastischen Elastomeren oder Thermoplasten und Festigkeitsträgern aufweisen. Die äußere Lage aus Festigkeitsträgern kann als Geflecht, Gestrick, Gewirke, Gewebe oder dergleichen vorliegen. KR 2013 0068933 A offenbart hitzebeständige Schläuche, die bei 200°C verwendet werden können und welche eine innere und äußere Lage aus Acrylatkautschuk aufweisen und eine dazwischenliegende Verstärkungslage. KR 2019 0129497 A offenbart hitzebeständige Schläuche welche eine innere und äußere Lage aus Epichlorhydrin-Kautschuk aufweisen und eine dazwischenliegende Verstärkungslage. US 3 060 973 A offenbart Hydraulikschläuche welche eine innere Gummilage, eine Verstärkungslage und eine äußere Lage aufweisen wobei es sich bei der Verstärkungslage um ein Geflecht handelt. US 2013/000767 A1 offenbart hitzebeständige Schläuche welche eine innere und äußere Lage aus Kautschuk aufweisen, bei dem es sich um EPDM handeln kann, und zwei dazwischen liegende Verstärkungslagen.

Für höhere Temperaturen von 150°C werden meist Einlageschläuche mit kostenintensiveren Aramiden eingesetzt. Einlageschläuche weisen aufgrund der notwendigen hochwertigen elastomeren Außenschicht über dem Festigkeitsträger einen deutlichen Kosten- und Gewichtsnachteil auf. Nachteilig sind auch eine reduzierte Flexibilität und ein erhöhter Platzbedarf.

Für Hochtemperaturanwendungen sind Festigkeitsträgerlagen aus speziellen Fasern erforderlich. Im Bereich der Hochtemperaturfasern (>190°C) sind u.a. meta-Aramid, Polyphenylensulfid (PPS), Glasfaser, Basaltfaser, sowie Polyoxadiazol (POD) bekannt. Sie werden für Schlauchanwendungen bis 250°C verwendet. Um die Temperatur- bzw. Flammbeständigkeit weiter zu erhöhen, müssen aber zusätzliche konstruktive Maßnahmen ergriffen werden, wie z.B. Überzugsschläuche, Hitzeschutztaschen, Hitzeschutzbleche.

Die Aufgabe der Erfindung besteht darin, einen Schlauch bereitzustellen, der für Anwendungen bei hoher Temperaturen von über 150 °C, bevorzugt über 200°C und besonders bevorzugt über 250°C noch beständig ist, ohne dass zusätzliche konstruktive Maßnahmen, wie z.B. Hitzeschutztaschen, erforderlich sind.

Gelöst wird diese Aufgabe durch einen Schlauch, umfassend eine Innenschicht (1) und eine darüber angeordnete Festigkeitsträgerlage (2), dadurch gekennzeichnet, dass die Festigkeitsträgerlage Fasern aufweist, die PAC-Fasern und/oder MAC-Fasern sind, wobei PAC-Fasern Polyacrylfasern sind und MAC-Fasern Modacrylfasern sind und wobei der Anteil der Fasern, die PAC-Fasern und/oder MAC-Fasern sind, in der Festigkeitsträgerlage (2) mindestens 15 Gew.-% bezogen auf das Gesamtgewicht der Festigkeitsträgerlage, beträgt und wobei die Festigkeitsträgerlage (2) ferner Fasern aus einem Material umfasst, die von den Fasern, die PAC-Fasern und/oder MAC-Fasern sind, verschieden sind, wobei diese anderen Fasern ausgewählt sind aus Fasern aus Meta-Aramid, Para-Aramid, Polyphenylensulfid (PPS), Polyoxadiazol (POD), Poly(p-phenylen-2,6-benzobisoxazol) (PBO), Polyetheretherketon (PEEK), Glas, Basalt, Metall und/oder Carbon.

PAC-Fasern sind Polyacrylfasern. MAC-Fasern sind Modacrylfasern. PAC (alternativ: PAN) und MAC sind hierfür übliche Kurzzeichen (vgl. DIN 60000-4:19990-05).

Der erfindungsgemäße Schlauch ist bei Temperaturen bis und über 150 °C, bevorzugt über 200°C und besonders bevorzugt über 250°C beständig. Zusätzlichen Hitzeschutzmaßnahmen durch deren Aufbringung als äußere Lage sind nicht erforderlich, so dass die Temperaturbeständigkeit über 150 °C, bevorzugt über 200°C und besonders bevorzugt über 250°C hinaus ohne Zusatzmaßnahmen erweitert werden kann. Bestehende Schlauchprodukte können durch Aufnahme einer äußeren Festigkeitsträgerlage, die Fasern aufweist, die PAC-Fasern und/oder MAC-Fasern sind, in der Flamm- und Temperaturbeständigkeit verbessert werden.

Weitere Vorteile des erfindungsgemäßen Schlauchs sind höhere Flexibilität und geringeres Gewicht durch geeignete Materialauswahl. Außerdem ist eine kompaktere Bauweise durch Hybridkonstruktionen möglich. Sich anschließende Arbeitsschritte, wie z.B. Aufbringen eines zusätzlichen Flammschutzes und/oder Hitzeschutzes sind nicht mehr erforderlich.

Des Weiteren sind die erfindungsgemäßen Schläuche auf Basis der Fasern antibakteriell bzw. permanent antibakteriell und/oder für Infrarot undurchlässig.

Im Folgenden wird die Erfindung im Einzelnen erläutert.

Der Schlauch weist eine Innenschicht auf, die insbesondere einen Schlauch bzw. einen flexiblen Schlauch darstellt.

Die Festigkeitsträgerlage ist über der Innenschicht angeordnet und weist Fasern auf, die PAC-Fasern und/oder MAC-Fasern sind. Die Fasern sind bevorzugt PyroTex^{®}-Fasern. PyroTex^{®} ist eine auf Basis Acrylnitril entwickelte Faser der Firma PyroTex Industries GmbH, Hamburg, Deutschland. PyroTex^{®} ist im Handel erhältlich. Es gibt PyroTex^{®} gefärbt oder ungefärbt und mit verschiedenen Titern, die alle für die vorliegende Erfindung eingesetzt werden können.

Entsprechend der Erfindung, liegt der Anteil der Fasern, die PAC-Fasern und/oder MAC-Fasern sind, z.B. PyroTex^{®}-Fasern, in der Festigkeitsträgerlage (2) bei mindestens 15 Gew.-%, bevorzugt mindestens 50 Gew.-%, bezogen auf das Gesamtgewicht der Festigkeitsträgerlage, und wobei die Festigkeitsträgerlage (2) ferner Fasern aus einem Material umfasst, die von den Fasern, die PAC-Fasern und/oder MAC-Fasern sind, verschieden sind, wobei diese anderen Fasern ausgewählt sind aus Fasern aus Meta-Aramid, Para-Aramid, Polyphenylensulfid (PPS), Polyoxadiazol (POD), Poly(p-phenylen-2,6-benzobisoxazol) (PBO), Polyetheretherketon (PEEK), Glas, Basalt, Metall und/oder Carbon.

Die Fasern, die PAC-Fasern und/oder MAC-Fasern sind, z.B. PyroTex^{®}-Fasern, können insbesondere durch Flechten, Spiralisieren, Stricken bzw. als Gewebe als Festigkeitsträgerlage in den Schlauch, z.B. ein Einlage- oder Umlageschlauch, eingebracht werden. Dementsprechend ist die Festigkeitsträgerlage bevorzugt ein Geflecht, ein Gestrick, ein Gewebe oder eine Spirale.

Entsprechend der Erfindung kann eine Kombination von weiteren physikalischen Eigenschaften über die Beimischung von unterschiedlichen Fasermaterialien erreicht werden. Dementsprechend umfasst die Festigkeitsträgerlage ferner Fasern aus einem Material, die von der Fasern, die PAC-Fasern und/oder MAC-Fasern sind, z.B. den PyroTex^{®}-Fasern, verschieden sind. Diese werden im Folgenden auch als andere Fasern bezeichnet.

Diese anderen Fasern sind ausgewählt aus Fasern aus Meta-Aramid, Para-Aramid, Polyphenylensulfid (PPS), Polyoxadiazol (POD), Poly(p-phenylen-2,6-benzobisoxazol) (PBO), Polyetheretherketon (PEEK), Glas, Basalt, Metall und/oder Carbon.

Die unterschiedlichen Fasern können hierbei alleine oder in Kombination, z.B. als Hybrid oder als Mischgeflecht, verwendet werden. Ein Mischgeflecht besteht hierbei aus wenigstens zwei alleinstehenden Fäden, die z.B. miteinander verflochten, als Webware verwoben, als Maschenware verstrickt, als Vlies oder Filz verarbeitet sind. Bei einem Hybrid besteht der Faden aus wenigstens zwei verschiedenen Materialien.

In einer bevorzugten Ausführungsform ist die Festigkeitsträgerlage aus Core-Garn und/oder Umwindezwirn gebildet. Ein Core-Garn umfasst einen Kernfaden aus Filamentfaser und/oder Stapelfaser, der mit Stapelfasern umsponnen wird. Ein Umwindezwirn umfasst einen Kernfaden aus Filamentfaser und/oder Stapelfaser, der mit einem Stapelfasergarn und/oder Filamentgarn umwickelt wird.

Bei dem Core-Garn kann der Kernfaden aus den Fasern, die aus PAC-Fasern und/oder MAC-Fasern sind, gebildet sein und die Stapelfasern können aus einem oder mehreren anderen Fasern, wie vorstehend beschrieben, gebildet sein, oder umgekehrt. Beide Varianten sind möglich, gewöhnlich ist es aber eher bevorzugt, dass die Fasern, die PAC-Fasern und/oder MAC-Fasern sind, die Stapelfasern sind und der Kernfaden aus dem einem oder den mehreren anderen Fasern gebildet ist.

Bei dem Umwindezwirn kann der Kernfaden aus den Fasern, die aus PAC-Fasern und/oder MAC-Fasern sind, gebildet sein und das Stapelfaser- und/oder Filamentgarn kann aus einem oder mehreren anderen Fasern, wie vorstehend beschrieben, gebildet sein, oder umgekehrt. Beide Varianten sind möglich, gewöhnlich ist es aber eher bevorzugt, dass die Fasern, die PAC-Fasern und/oder MAC-Fasern sind, das Stapelfaser- und/oder Filamentgarn sind und der Kernfaden aus dem einem oder den mehreren anderen Fasern gebildet ist.

In einer bevorzugten Ausführungsform ist die Festigkeitsträgerlage aus einem Hybridzwirn, einem Mischfasergarn und/oder einem Mischfaserzwirn gebildet. Der Hybridzwirn, das Mischfasergarn oder das Mischfaserzwirn sind dabei jeweils aus den Fasern, die PAC-Fasern und/oder MAC-Fasern sind, und einer oder mehreren anderen Fasern, wie vorstehend beschrieben, gebildet. Bei den Fasern handelt es sich dabei jeweils bevorzugt um Stapelfasern.

Ein Hybridzwirn wird aus zwei oder mehr verschiedene Garnen gebildet, die jeweils vollständig aus einem Fasermaterial aufgebaut sind, die sich voneinander unterscheiden. Ein Mischfasergarn wird aus zwei oder mehr Fasern gebildet, die jeweils aus einem unterschiedlichen Fasermaterial gebildet sind. Ein Mischfaserzwirn ist aus zwei oder mehr Mischfasergarne gebildet, die zu einem Zwirn verdreht sind. Die Mischfasergarne zur Herstellung des Zwirns können hierbei gleich oder verschieden voneinander sein.

Gemäß DIN 60900_01:1988 handelt es sich bei einem Zwirn um ein linienförmiges textiles Gebilde, welches durch Zusammendrehen (Zwirnen) von mindestens zwei Garnen hergestellt wurde. Es gibt einstufige und zweistufige Zwirne und zweifache und mehrfache Zwirne.

Ebenso gemäß DIN 60900_01:1988 ist ein Garn ein linienförmiges Gebilde, welches aus textilen Faserstoffen, z.B. Spinnfasern, welche auch als Stapelfasern bezeichnet werden, Filamente oder Bändchen, etc. hergestellt ist. Als Monofil wird ein Garn aus einem Filament (Endlosfaser) mit einem Durchmesser bis etwa 0,1mm bezeichnet, während als Filamentgarn ein Garn aus einem Filament (= Monofilamentgarn) oder mehreren Filamenten (= Multifilamentgarn, oft auch als Multifil bezeichnet) jeweils mit oder ohne Drehung bezeichnet wird, wobei die einzelnen Filamente einen Durchmesser bis etwa 0,1mm haben können. Die Begriffe Monofil und Monofilamentgarn können daher für einfädige, praktisch endlose Fasern synonym verwendet werden. Spinnfasern bzw. Stapelfasern haben hierbei eine limitierte Länge, während Filamentfasern endlos sind, siehe auch ISO 8159:1987.

Die Festigkeitsträgerlage kann einschichtig oder mehrschichtig ausgebildet sein. Bevorzugt hat die Festigkeitsträgerlage 1 bis 5 Schichten, besonders bevorzugt 1 bis 3 Schichten und ganz besonders bevorzugt 1 bis 2 Schichten.

Als Material für die Innenschicht (1) können grundsätzlich alle Elastomere, thermoplastische Elastomere oder Thermoplaste eingesetzt werden. Bevorzugt sind Elastomere, thermoplastische Elastomere oder Thermoplaste, die eine Temperaturbeständigkeit von größer oder gleich 150°C aufweisen.

Die Elastomere sind beispielsweise ausgewählt aus der Gruppe, bestehend aus: (teil)hydriertem Nitrilkautschuk (HNBR) und / oder Fluor-Kautschuk (FKM oder FPM) und / oder Polyepichlorhydrin (ECO) und / oder Ethylen-Vinylacetat-Kautschuk (EVA) und / oder Acrylat-Kautschuk (ACM) und / oder Ethylen-Acrylat-Kautschuk (AEM) und / oder Silikonkautschuk (MQ, VMQ, PVMQ, FVMQ) und / oder Fluoriertem Methylsilikonkautschuk (MFQ) und / oder Perfluoriertem Propylen-Kautschuk (FFPM) und / oder Perfluorcarbon-Kautschuk (FFKM) und / oder Ethylen-Propylen-Dien-Kautschuk (EPDM).

Besonders gute Ergebnisse hinsichtlich der dynamischen Stabilität bei hohen Temperaturen lassen sich erzielen, wenn HNBR, FKM, FPM, ACM, AEM und / oder Silikonkautschuk verwendet wird, wobei FKM, FPM und AEM besonders gut geeignet sind.

Die genannten Elastomere können alleine oder im Verschnitt mit wenigstens zwei Elastomeren eingesetzt werden.

Ebenso ist es möglich, die Elastomere im Verschnitt mit Thermoplastischen Elastomeren und / oder Thermoplasten zu verwenden.

Als Thermoplastisches Elastomer findet vorzugsweise wenigstens ein Thermoplastisches Elastomer mit Polycarbonatanteil (TPE-C) Verwendung.

Der erfindungsgemäße Schlauch kann neben der Innenschicht eine oder mehrere weitere Lagen oder Schichten aus unterschiedlichen, Elastomeren, thermoplastischen Elastomeren oder Thermoplasten enthalten. Als Materialien kommen die in Betracht, die vorstehend für die Innenschicht genannt sind.

Der Umlageschlauch kann zusätzlich mit einer biegesteifen Verstärkung, wie sie bspw. aus EP 202 436 A2 für Schläuche mit einer (elastomeren) Deckschicht bekannt sind, ausgerüstet sein. Bei der biegesteifen Verstärkung handelt es sich vorzugsweise um Monofile, auch als Monofilamente bezeichnet, welche gleich- oder gegensinnig um bzw. in die Umlage gewickelt sind. Die Monofile können dabei auch gekreuzt gewickelt sein. Die Monofile können aus einem metallischen, wie bspw. Edelstahl, oder einem nicht-metallischen Werkstoff, wie bspw. PPS oder POD, aufgebaut sein. D.h. das Material der biegesteifen Verstärkung kann hierbei gleich oder verschieden vom Material der Festigkeitsträgerlage sein.

Der Schlauchaufbau kann wie ausgeführt mehrlagig ausgeführt werden, wobei zusätzlich zur Innenschicht weitere Schichten aus Elastomer und/oder Thermoplast und/oder Festigkeitsträgerlagen im Schlauchaufbau vorhanden sein können. Der erfindungsgemäße Schlauch kann ein Umlageschlauch oder ein Einlageschlauch sein. Ein Umlageschlauch umfasst eine Innenschicht und eine Festigkeitsträgerlage, wobei die Festigkeitsträgerlage über der Innenschicht angeordnet ist. Ein Einlageschlauch umfasst eine Innenschicht, eine Festigkeitsträgerlage und eine äußere Schicht, wobei die Festigkeitsträgerlage über der Innenschicht und die äußere Schicht über der Festigkeitsträgerlage angeordnet ist.

In einer Ausführungsform ist auf der Festigkeitsträgerlage zusätzlich eine Versiegelung aufgebracht. Diese Ausführungsform eignet sich insbesondere für Umlageschläuche. Derartige Versiegelungen sind bspw. aus der WO 2017/092894 A1 bekannt, die dort als Umlagenschutz bezeichnet werden.

Das Versiegelungsmaterial wird dabei in flüssiger Form, z.B. als Lösung oder Dispersion in einem organischen oder anorganischen Lösungsmittel, insbesondere Wasser, auf die Festigkeitsträgerlage aufgebracht und bildet nach Verdampfung des Lösungsmittels die Versiegelung. Besonders geeignet sind bspw. Kunstharzdispersionen auf Wasserbasis wie sie in der WO 2017/092894 A1 beschrieben sind. Die Dispersion kann besonders gut in die Festigkeitsträgerlage eindringen und dort einzelne Fasern miteinander verkleben. Die Verklebung der Fasern verhindert das Ausfransen, z.B. beim Schneiden oder Stanzen.

Die Versiegelung kann bevorzugt aus Kunstharzen gebildet sein, wobei Acrylate, insbesondere Styrolacrylat, und / oder Polyvinylacetate bevorzugt sind. Resorcinformaldehydlatex (RFL) und Fluorpolymere sind ebenfalls geeignet. Die Versiegelung kann Zusatzstoffe enthalten. Beispiele für Zusatzstoffe sind Partikel, insbesondere Metallpartikel, zur Erhöhung des Strahlungs- bzw. Wärmeschutzes, Pigmente, farbgebende Substanzen oder Füllstoffe.

Die Versiegelung kann z.B. als Schnittschutz, welcher das Ausfransen der Schnittstelle verhindert, als UV-Schutz, zur Verbesserung der Haftung zwischen Faser und Innenschicht oder zur Erhöhung der chemischen und mechanischen Beständigkeit dienen. Zusätzlich kann eine bessere Geometriehaltigkeit insbesondere bei Formschläuchen erreicht werden.

In einer Ausführungsform ist die Festigkeitsträgerlage zusätzlich mit einem Überzug versehen. Diese Ausführungsform eignet sich insbesondere für Umlageschläuche. Derartige Überzüge sind bspw. aus der EP 3175977 A1 bekannt. Der Überzug bildet vorzugsweise keinen festen Haftverbund mit der Umlageschicht, so dass der Überzug von dem Schlauch auf- und abgezogen werden kann.

Der Überzug besteht in einer bevorzugten Ausführungsform aus einem Geflecht, Gewebe oder Gewirke oder Gestrick. Als Materialien für den Überzug können alle der fachkundigen Person bekannten natürlichen und synthetischen Materialien verwendet werden. Derartige Materialien sind bspw. in der EP 3175977 A1 beschrieben. Vorteilhaft wird bspw. für das Gewebe, insbesondere ein Bi-Stretch-Gewebe, und das Gewirke ein Hybridmaterial aus Baumwolle, Polyamid oder Polyester und Elastan, mit einer Baumwoll-dominierenden Seite und einer Polyamid- oder Polyester-dominierenden Seite verwendet.

Der Überzug ergibt einen verbesserten Schutz vor mechanischer Belastung. Es kann auch eine bessere Geometriehaltigkeit insbesondere bei Formschläuchen erreicht werden. Eine zwischen der Oberfläche des Schlauchs, insbesondere Umlageschlauches, und dem Überzug befindliche Luftschicht kann im Brandfall als Isolationsschicht dienen.

In einer Ausführungsform ist die Innenschicht auf der Innenseite, d.h. auf der zum Inneren des Schlauchs zeigenden Seite, mit einer Sperrschicht versehen. Eine solche Sperrschicht kann zweckmäßig sein, um eine Diffusionsbarriere zu bilden oder die Innenschicht vor aggressiven Medien zu schützen, die durch den Umlageschlauch befördert werden. Die Sperrschicht kann z.B. aus thermoplastischen fluorhaltigen Polymeren, Fluor-Kautschuk (FKM) und / oder Polyepichlorhydrin (ECO) aufgebaut sein.

Ebenso können neben der beschriebenen Festigkeitsträgerlage gegebenenfalls noch eine oder mehrere eingebettete gleiche oder davon verschiedene Festigkeitsträgerlagen vorhanden sein. Für verschiedene Festigkeitsträgerlagen können alle der fachkundigen Person bekannten Festigkeitsträgerwerkstoffe verwendet werden. Diese zusätzlichen Festigkeitsträgerlagen befinden sich bevorzugt zwischen der Innenschicht und der beschriebenen Festigkeitsträgerlage.

Der Schlauch findet vorzugsweise Verwendung im Bereich Turboladerschmierung, Turboladerkühlung oder Turboladersteuerung, Kompressoren, Kraftstoffsystemen, Dieselpartikelfiltern (DPF), Otto-Partikelfilter (OPF), Aktivkohlefilter (AKF), Getriebe- und Motorkühlung, Kühlwasser, Industrieschläuche oder in Bereichen, in denen aggressive Medien oder Öle unter hohen Temperaturen transportiert werden müssen.

Die Erfindung betrifft auch die Verwendung eines erfindungsgemäßen Schlauchs wie vorstehend beschrieben als temperaturbeständigen Schlauch für Temperaturen über 150 °C, bevorzugt über 200°C und besonders bevorzugt über 250°C.

Die Erfindung wird nun anhand von Ausführungsbeispielen unter Bezugnahme auf schematische Zeichnungen erläutert.

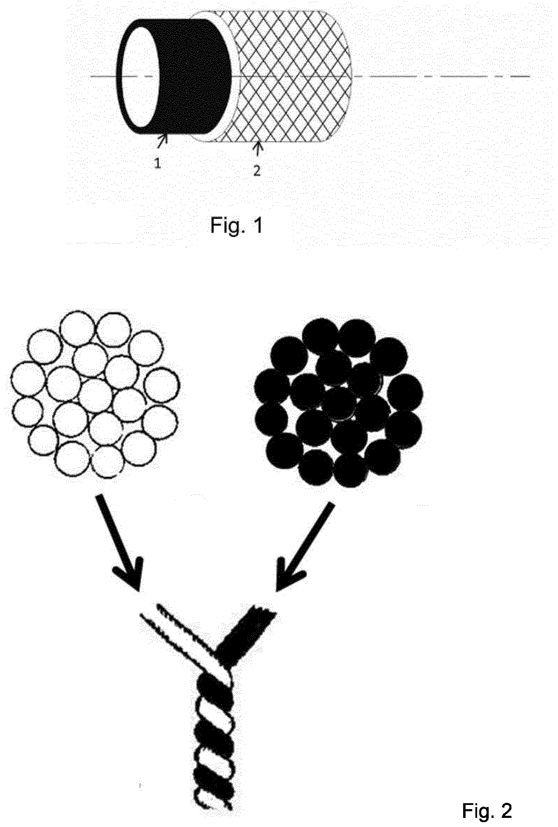

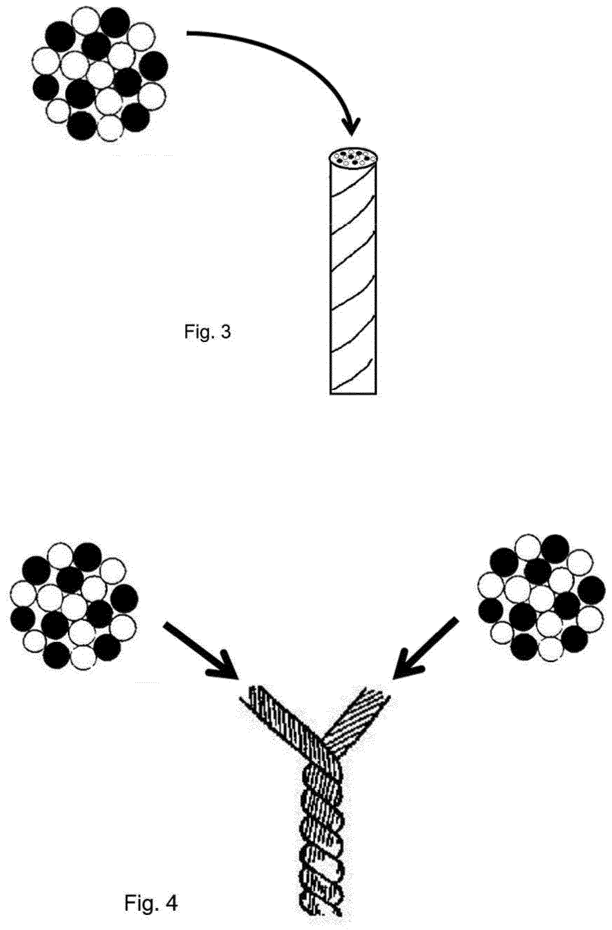

Fig. 1 zeigt einen erfindungsgemäßen Schlauch, aufgebaut aus einer Innenschicht 1 und einer Festigkeitsträgerlage bzw. Umlageschicht 2. Die Festigkeitsträgerlage weist Fasern, die PAC-Fasern und/oder MAC-Fasern sind, z.B. Pyrotex^{®}-Fasern, auf. Der Schlauch ist ein Umlageschlauch. Die Figuren 1 bis 3 zeigen jeweils unterschiedliche Garnaufbauten, die in der Festigkeitsträgerlage eingesetzt werden können. Die schematisch in Weiß dargestellten Fasern bestehen hierbei aus einem anderen Material als die schematisch in Schwarz dargestellten Fasern. Beispielsweise sind die in Weiß dargestellten Fasern Fasern, die PAC-Fasern und/oder MAC-Fasern, z.B. PyroTex^{®}-Fasern, sind, und die in Schwarz dargestellten Fasern sind aus einem unterschiedlichen Material, den anderen Fasern, für die vorstehend Beispiele genannt wurden.
Fig. 2 zeigt einen Hybridzwirn, bestehend aus zwei verschiedenen Garnen, die jeweils vollständig aus einem anderen Material aufgebaut sind.
Fig. 3 zeigt ein Mischfasergarn, welches aus wenigstens zwei Fasern besteht, die verschiedenartig voneinander sind.
Fig. 4 zeigt einen Mischfaserzwirn, bei dem zwei Mischfasergarne zu einem Zwirn verdreht sind.

### Bezugszeichenliste

- 1: Innenschicht
- 2: Festigkeitsträgerlage

## Patentansprüche

1. Schlauch, umfassend eine Innenschicht (1) und eine darüber angeordnete Festigkeitsträgerlage (2), **dadurch gekennzeichnet, dass** die Festigkeitsträgerlage Fasern aufweist, die PAC-Fasern und/oder MAC-Fasern sind, wobei PAC-Fasern Polyacrylfasern sind und MAC-Fasern Modacrylfasern sind und wobei der Anteil der Fasern, die PAC-Fasern und/oder MAC-Fasern sind, in der Festigkeitsträgerlage (2) mindestens 15 Gew.-% bezogen auf das Gesamtgewicht der Festigkeitsträgerlage, beträgt und
wobei die Festigkeitsträgerlage (2) ferner Fasern aus einem Material umfasst, die von den Fasern, die PAC-Fasern und/oder MAC-Fasern sind, verschieden sind, wobei diese anderen Fasern ausgewählt sind aus Fasern aus Meta-Aramid, Para-Aramid, Polyphenylensulfid (PPS), Polyoxadiazol (POD), Poly(p-phenylen-2,6-benzobisoxazol) (PBO), Polyetheretherketon (PEEK), Glas, Basalt, Metall und/oder Carbon.

2. Schlauch nach Anspruch 1, wobei der Anteil der Fasern, die PAC-Fasern und/oder MAC-Fasern sind, in der Festigkeitsträgerlage (2) mindestens 50 Gew.-%, bezogen auf das Gesamtgewicht der Festigkeitsträgerlage, beträgt.

3. Schlauch nach Anspruch 1 oder Anspruch 2, wobei die Festigkeitsträgerlage (2) ein Geflecht, ein Gestrick, ein Gewebe oder eine Spirale darstellt.

4. Schlauch nach irgendeinem der Ansprüche 1 bis 3, wobei die Festigkeitsträgerlage (2) aus Core-Garn und/oder Umwindezwirn gebildet ist, wobei ein Core-Garn einen Kernfaden aus Filamentfaser und/oder Stapelfaser umfasst, der mit Stapelfasern umsponnen wird, und ein Umwindezwirn einen Kernfaden aus Filamentfaser und/oder Stapelfaser umfasst, der mit einem Stapelfasergarn und/oder Filamentgarn umwickelt wird.

5. Schlauch nach irgendeinem der Ansprüche 1 bis 4, wobei die Festigkeitsträgerlage (2) aus einem Hybridzwirn, einem Mischfasergarn und/oder einem Mischfaserzwirn gebildet ist.

6. Schlauch nach irgendeinem der Ansprüche 1 bis 5, wobei die Innenschicht (1) (teil)hydrierten Nitrilkautschuk (HNBR) und / oder Fluor-Kautschuk (FKM) und / oder Polyepichlorhydrin (ECO) und / oder Ethylen-Vinylacetat-Kautschuk (EVA) und / oder Acrylat-Kautschuk (ACM) und / oder Ethylen-Acrylat-Kautschuk (AEM) und / oder Silikonkautschuk (MQ, VMQ, PVMQ, FVMQ) und / oder Fluorierten Methylsilikonkautschuk (MFQ) und / oder Perfluorierten Propylen-Kautschuk (FFPM) und / oder Perfluorcarbon-Kautschuk (FFKM) und / oder Ethylen-Propylen-Dien-Kautschuk (EPDM) umfasst.

7. Schlauch nach irgendeinem der Ansprüche 1 bis 6, wobei der Schlauch eine äußere Schicht aufweist.

8. Schlauch nach irgendeinem der Ansprüche 1 bis 7, wobei der Schlauch ein Umlageschlauch oder ein Einlageschlauch ist.

9. Schlauch nach irgendeinem der Ansprüche 1 bis 8, wobei auf der Festigkeitsträgerlage (2) eine Versiegelung aufgebracht ist und/oder die Festigkeitsträgerlage (2) mit einem Überzug versehen ist.

10. Schlauch nach irgendeinem der Ansprüche 1 bis 9, wobei die Innenschicht (1) auf der Innenseite mit einer Sperrschicht versehen ist.

11. Schlauch nach einem der Ansprüche 1 bis 10, wobei der Schlauch ein Schlauch für die Turboladerschmierung, Turboladerkühlung oder Turboladersteuerung, ein Kompressor-Schlauch, ein Schlauch für Dieselpartikelfilter (DPF), Otto-Partikelfilter (OPF) oder Aktivkohlefilter (AKF), ein Industrieschlauch, ein Kraftstoffschlauch, ein Kühlwasserschlauch, ein Motor-/Getriebeölschlauch oder ein Ölschlauch ist.

12. Verwendung eines Schlauchs nach einem der Ansprüche 1 bis 11 als temperaturbeständigen Schlauch für Temperaturen über 150°C, bevorzugt über 200°C und besonders bevorzugt über 250°C.

13. Verwendung eines Schlauchs nach Anspruch 12 als Schlauch für die Turboladerschmierung, Turboladerkühlung oder Turboladersteuerung, Kompressor-Schlauch, Schlauch für Dieselpartikelfilter (DPF), Otto-Partikelfilter (OPF) oder Aktivkohlefilter (AKF), Industrieschlauch, Kraftstoffschlauch, Kühlwasserschlauch, Motor-/Getriebeölschlauch oder Ölschlauch.

14. Verwendung eines Schlauchs nach einem der Ansprüche 1 bis 11 als antibakteriellen Schlauch und/oder als für Infrarot undurchlässigen Schlauch.

## Claims

1. Hose, comprising an inner layer (1) and a strength member ply (2) arranged thereabove, **characterized in that** the strength member ply comprises fibres that are PAC fibres and/or MAC fibres, wherein PAC fibres are polyacrylic fibres and MAC fibres are modacrylic fibres and wherein the proportion of the fibres that are PAC fibres and/or MAC fibres in the strength member ply (2) is at least 15% by weight based on the total weight of the strength member ply and
wherein the strength member ply (2) further comprises fibres of a material distinct from the fibres that are PAC fibres and/or MAC fibres, wherein these other fibres are selected from the fibres of meta-aramid, para-aramid, polyphenylene sulfide (PPS), polyoxadiazole (POD), poly(p-phenylene-2,6-benzobisoxazole) (PBO), polyether ether ketone (PEEK), glass, basalt, metal and/or carbon.

2. Hose according to Claim 1, wherein the proportion of the fibres that are PAC fibres and/or MAC fibres in the strength member ply (2) is at least 50% by weight based on the total weight of the strength member ply.

3. Hose according to Claim 1 or Claim 2, wherein the strength member ply (2) is a braid, a knit, a woven or a spiral.

4. Hose according to any of Claims 1 to 3, wherein the strength member ply (2) is formed from core yarn and/or overwrapping twine, wherein a core yarn comprises a core thread of filament fibre and/or staple fibre which is overspun with staple fibres and an overwrapping twine comprises a core thread of filament fibre and/or staple fibre which is overwrapped with a staple fibre yarn and/or filament yarn.

5. Hose according to any of Claims 1 to 4, wherein the strength member ply (2) is formed from a hybrid twine, a blended fibre yarn and/or a blended fibre twine.

6. Hose according to any of Claims 1 to 5, wherein the inner layer (1) comprises (partially) hydrogenated nitrile rubber (HNBR) and/or fluororubber (FKM) and/or polyepichlorohydrin (ECO) and/or ethylene-vinyl acetate rubber (EVA) and/or acrylate rubber (ACM) and/or ethylene-acrylate rubber (AEM) and/or silicone rubber (MQ, VMQ, PVMQ, FVMQ) and/or fluorinated methylsilicone rubber (MFQ) and/or perfluorinated propylene rubber (FFPM) and/or perfluorocarbon rubber (FFKM) and/or ethylene-propylene-diene rubber (EPDM).

7. Hose according to any of Claims 1 to 6, wherein the hose comprises an outer layer.

8. Hose according to any of Claims 1 to 7, wherein the hose is a mantle hose or an insert hose.

9. Hose according to any of Claims 1 to 8, wherein the strength member ply (2) has a seal applied to it and/or the strength member ply (2) has been provided with a coating.

10. Hose according to any of Claims 1 to 9, wherein the inner layer (1) has been provided with a barrier layer on the inside.

11. Hose according to any of Claims 1 to 10, wherein the hose is a hose for turbocharger lubrication, turbocharger cooling or turbocharger control, a compressor hose, a hose for a diesel particulate filter (DPF), an otto particulate filter (OPF) or an activated carbon filter (ACF), an industrial hose, a fuel hose, a cooling water hose, an engine/transmission oil hose or an oil hose.

12. Use of a hose according to any of Claims 1 to 11 as a heat-resistant hose for temperatures above 150°C, preferably above 200°C and particularly preferably above 250°C.

13. Use of a hose according to Claim 12 as a hose for turbocharger lubrication, turbocharger cooling or turbocharger control, a compressor hose, a hose for a diesel particulate filter (DPF), an otto particulate filter (OPF) or an activated carbon filter (ACF), an industrial hose, a fuel hose, a cooling water hose, an engine/transmission oil hose or an oil hose.

14. Use of a hose according to any of Claims 1 to 11 as an antibacterial hose and/or as an infrared-impermeable hose.

## Revendications

1. Tuyau flexible comprenant une couche interne (1) et une couche de renfort (2) disposée au-dessus de celle-ci, **caractérisé en ce que** la couche de renfort comporte des fibres qui sont des fibres PAC et/ou des fibres MAC, les fibres PAC étant des fibres polyacryliques et les fibres MAC étant des fibres modacryliques et la proportion des fibres qui sont des fibres PAC et/ou des fibres MAC dans la couche de renfort (2) étant d'au moins 15 % en poids par rapport au poids total de la couche de renfort et
dans lequel la couche de renfort (2) comprend en outre des fibres à base d'une matière, qui sont différentes des fibres qui sont des fibres PAC et/ou des fibres MAC, ces autres fibres étant choisies parmi les fibres de méta-aramide, para-aramide, poly(sulfure de phénylène) (PPS), polyoxadiazole (POD), poly(p-phénylène-2,6-benzobisoxazole (PBO), polyétheréthercétone (PEEK), verre, basalte, métal et/ou carbone.

2. Tuyau flexible selon la revendication 1, dans lequel la proportion des fibres qui sont des fibres PAC et/ou des fibres MAC dans la couche de renfort (2) est d'au moins 50 % en poids, par rapport au poids total de la couche de renfort.

3. Tuyau flexible selon la revendication 1 ou la revendication 2, dans lequel la couche de renfort (2) représente une tresse, un tricot, un tissu ou une spirale.

4. Tuyau flexible selon l'une quelconque des revendications 1 à 3, dans lequel la couche de renfort (2) est formée à partir de fil à âme et/ou fil retors de guipage, un fil à âme comprenant un fil d'âme à base de fibres continues et/ou de fibres coupées, qui est guipé avec des fibres coupées, et un fil retors de guipage comprenant un fil d'âme à base de fibres continues et/ou de fibres coupées, qui est gainé avec un fil de fibres coupées et/ou un fil de filaments,

5. Tuyau flexible selon l'une quelconque des revendications 1 à 4, dans lequel la couche de renfort (2) est formée à partir d'un fil retors hybride, d'un fil de fibres mélangées et/ou d'un fil retors de fibres mélangées.

6. Tuyau flexible selon l'une quelconque des revendications 1 à 5, dans lequel la ouche interne (1) comprend du caoutchouc nitrile (partiellement) hydrogéné (HNBR) et/ou du caoutchouc fluoré (FKM) et/ou de la polyépichlorhydrine (ECO) et/ou du caoutchouc éthylène-acétate de vinyle (EVA) et/ou du caoutchouc acrylate (ACM) et/ou du caoutchouc éthylène-acrylate (AEM) et/ou du caoutchouc silicone (MQ, VMQ, PVMQ, FVMQ) et/ou du caoutchouc méthylsilicone fluoré (MFQ) et/ou du caoutchouc propylène perfluoré (FFPM) et/ou du caoutchouc perfluorocarbone (FFKM) et/ou du caoutchouc éthylène-propylène-diène (EPDM).

7. Tuyau flexible selon l'une quelconque des revendications 1 à 6, le tuyau flexible comportant une couche externe.

8. Tuyau flexible selon l'une quelconque des revendications 1 à 7, le tuyau flexible étant un tuyau flexible à enveloppe ou un tuyau flexible à couche de doublure.

9. Tuyau flexible selon l'une quelconque des revendications 1 à 8, dans lequel un scellement est appliqué sur la couche de renfort (2) et/ou la couche de renfort (2) est munie d'un revêtement.

10. Tuyau flexible selon l'une quelconque des revendications 1 à 9, dans lequel la couche interne (1) est munie d'une couche barrière sur la face interne.

11. Tuyau flexible selon l'une quelconque des revendications 1 à 10, le tuyau flexible étant un tuyau pour le graissage de turbocompresseur, le refroidissement de turbocompresseur ou la commande de turbocompresseur, un tuyau flexible de compresseur, un tuyau flexible pour filtre à particules diesel (FPD), filtre à particule essence (GPF) ou filtre à charbon actif (FCA), un tuyau flexible industriel, un tuyau flexible pour carburant, un tuyau flexible pour eau de refroidissement, un tuyau flexible pour huile de moteur/transmission ou un tuyau flexible pour huile.

12. Utilisation d'un tuyau flexible selon l'une quelconque des revendications 1 à 11 en tant que tuyau résistant à la température pour des températures de plus de 150 °C, de préférence de plus de 200 °C et de façon particulièrement préférée de plus de 250 °C.

13. Utilisation d'un tuyau flexible selon la revendication 12 en tant que tuyau flexible pour le graissage de turbocompresseur, le refroidissement de turbocompresseur ou la commande de turbocompresseur, tuyau flexible de compresseur, tuyau flexible pour filtre à particules diesel (FPD), filtre à particule essence (GPF) ou filtre à charbon actif (FCA), tuyau flexible industriel, tuyau flexible pour carburant, tuyau flexible pour eau de refroidissement, tuyau flexible pour huile de moteur/transmission ou tuyau flexible pour huile.

14. Utilisation d'un tuyau flexible selon l'une quelconque des revendications 1 à 11 en tant que tuyau antibactérien et/ou en tant que tuyau flexible ne laissant pas passer les rayons infrarouges.
